# EUROPEAN PATENT APPLICATION

(11) **EP 2 484 216 A1**
(43) Date of publication of application: **08.08.2012**
(21) Application number: 09849870.2
(22) Date of filing: 28.10.2009
(51) Int. Cl.: A23C 15/02

(54) **PRODUCTION METHOD FOR HARD BUTTER**

(30) Priority: 28.09.2009 KR 20090091779
(71) Applicant: CJ CheilJedang Corporation, Jung-gu Seoul 100-749 (KR)
(72) Inventor: KANG, Ji Hyun, Seoul 157-733 (KR); LEE, Sang Bum, Seoul 152-733 (KR); SONG, Sang Hoon, Suwon-si Gyeonggi-Do 442-754 (KR); KIM, Mi Jung, Seongnam-si Gyeonggi-Do 462-170 (KR)
(74) Representative: Bosch, Matthias
(86) International application number: PCT/KR2009/006249
(87) International publication number: WO 2011/037296

(57) **Abstract**

Provided is a method for producing SOS hard butter containing at least 85 w/w% of 1,3-distearoyl-2-oleoylglycerol (SOS) among triglycerides by means of the solvent fractionation method, comprising the steps of: producing a fat solution by using a solvent to dissolve a fat starting material obtained via an enzymatic ester-exchange reaction; crystallising out and removing a high-melting-point fraction by maintaining the fat solution at between 10 and 25°C; and crystallising out and collecting a mid-melting-point fraction by maintaining the fat solution, from which the high-melting-point fraction has been removed, at between 0 and 15°C.

## Description

### [Technical Field]

The present invention relates to a production method for hard butter and, more particularly, to a method of producing hard butter containing at least 85 w/w% of 1,3-distearoyl-2-oleoylglycerol (SOS) from fat obtained by enzymatic transesterification.

### [Background Art]

Hard butter developed to replace cacao butter has been widely used for bakery and confectionery food containing chocolate as a main component as well as for field of medicines and cosmetics. Hard butter includes symmetric triglycerides having one unsaturated bond (SUS) as main components, such as 1,3-dipalmitoyl-2-oleoylglycerol (POP), 1-palmitoyl-2-oleoyl-3-stearoylglycerol (POS) and 1,3-distearoyl-2-oleoylglycerol (SOS).

Hard butter may be produced by fractionating vegetable and animal fats. Fractionation may be generally carried out as follows. First, fat is liquefied or melted and cooled to a desired fractionation temperature to induce nucleus formation. Then, crystals are allowed to grow in a proper size and shape for effective fractionation. Finally, fractionation into a solid and a liquid is conducted, in which filtration, filter pressing, or centrifugal separation is used. Fractionation of fat may reversibly change the chemical composition of the fat simply using physical properties, without causing any change to an irreversible chemical composition as compared with other fat processing techniques.

Such fractionation of fat is distinguished from winterization. Although both fractionation of fat and winterization are used to separate desired parts, winterization is to remove trace amounts of wax, which deteriorates transparency, from a large amount of liquid oil, in which the oil was left for a certain period of time at a low temperature and then the wax is removed. Winterization removes a very small amount of wax, which is considered as a refining process rather than a fractionation process. On the contrary, in fractionation, since components to be fractionated are present at similar ratios, the chemical composition changes considerably before and after separation, thereby causing remarkable changes in physical properties of obtained fractions. Further, unlike winterization, fractionation requires very precise technology in cooling and separation.

Fat fractionation methods include dry fractionation and solvent fractionation.

In dry fractionation which does not use a solvent, since crystallization is conducted only relying on the melting point of fat itself, it is widely used due to development of crystallization pipes and high-pressure filter presses. Dry fractionation does not require post-treatment of final products and involves less damage to products, and thus has become popular as a fractionation technique. Further, dry fractionation is preferable in view of safety and cost, unlike solvent fractionation. However, due to lower precision in separation than solvent fractionation, dry fractionation involves infiltration of liquids while separating crystals, thus lowering purity of products, and has difficulty in handling a fractionation process.

Solvent fractionation may use organic solvents, such as alcohol, hexane, acetone, etc., to cause wide difference between melting points of triglycerides and fatty acid, thereby improving separation efficiency. Using such solvents enables quick fractionation due to decrease in viscosity of raw fat materials, effective selective crystallization, and good separation performance, thus increasing yield. Further, in separating crystals and liquids, the crystals can be washed with solvents, thereby improving the purity of the crystals. Although the solvent fractionation can overcome disadvantages of dry fractionation, a large process volume is needed, bringing about the burden of equipment costs, and involving potential explosion if hexane is used. However, solvent fractionation is actively used for producing hard butter having a minute composition due to its high separation performance.

Tastes of confectionery products made of hard butter may vary depending on compositions of hard butter. For example, since hard butter has an influence on the taste of chocolate, there is a need to develop hard butter for use of confectioneries including a good taste of chocolate. Chocolate made from hard butter rich in SOS has high hardness and is favorably melted in the mouth, and thus many people prefer it. Conventionally, a fractionation method at an extremely low temperature less than 0°C is used to produce hard butter rich in SOS, but it needs a long working time and high process costs.

### [Disclosure]

### [Technical Problem]

The inventors of the present invention have conducted extensive studies and developed a method of cost-effectively producing high-purity 1,3-distearoyl-2-oleoylglycerol (SOS) hard butter having a high SOS content, which enables reduction in working time and process costs.

The present invention is directed to providing a method of producing high-purity SOS hard butter which enables reduction in working time and manufacturing costs.

The present invention is also directed to providing chocolates including high-purity SOS hard butter prepared by the above method.

### [Technical Solution]

In accordance with one aspect of the present invention, a method of producing 1,3-distearoyl-2-oleoylglycerol (SOS) hard butter containing at least 85 w/w% of SOS among triacylglycerides by means of a solvent fractionation method includes: preparing a fat solution by dissolving a fat-based material obtained via enzymatic transesterification in a solvent; crystallizing and removing a high-melting-point fraction by maintaining the fat solution at from 10 to 25°C; and crystallizing and collecting a mid-melting-point fraction by maintaining the fat solution, from which the high-melting-point fraction has been removed, at from 0 to 15°C.

In accordance with another aspect of the present invention, there is provided chocolates containing high-purity SOS hard butter prepared by the above method.

Hereinafter, the present invention will be described in detail.

In the present invention, fat-based materials containing at least 25 w/w% of SOS prepared via enzymatic transesterification are dissolved in a solvent by solvent fractionation, a high-melting-point fat fraction is crystallized and removed by lowering the temperature of the solution, and solids are crystallized and collected by further lowering the temperature of the solution, thereby producing high-purity SOS hard butter having an SOS content of at least 85 w/w%. According to the present invention, fractionation is carried out within a range of room temperature (0 to 25°C), not at an extremely low temperature of less than 0 °C, to raise the temperature of a refrigerant, thereby enabling decrease in working time and process costs.

Thus, in an aspect of the invention, a method of producing SOS hard butter containing at least 85 w/w% of SOS among triacylglycerides by means of a solvent fractionation method includes: preparing a fat solution by dissolving a fat-based material in a solvent; crystallizing and removing a high-melting-point fraction by maintaining the fat solution at from 10 to 25°C; and crystallizing and collecting a mid-melting-point fraction by maintaining the fat solution, from which the high-melting-point fraction has been removed, at from 0 to 15°C.

The fat-based material may be obtained by enzymatic transesterification of vegetable fat or oil. Preferably, the vegetable fat or oil may include vegetable fat or oil having an oleic acid content of at least 80%, such as high oleic acid content sunflower oil, which is a representative vegetable fat or oil in the present invention. The enzymatic transesterification may be carried out by reacting vegetable fat or oil with stearic ethyl ester in the presence of sn-1,3-specific enzymes. Sn-1,3-specific enzymes may include enzymes extracted from *Rhizopus delemar, Mucor miehei, Aspergilillus niger, Rhizopus arrhizus, Rhizopus niveus, Mucor javanicus, Rhizopus javanicus, Rhizopus oryzae,* etc., without being limited thereto. A product obtained through enzymatic transesterification is distilled at 0.1 to 0.2 mmHg and 200 to 250°C to remove ethyl ester, thereby obtaining a triacylglyceride (TAG) content of at least 98 %. TAGs, from which ethyl ester has been removed via enzymatic transesterification and distillation, have insignificant quality variation regarding SOS content as compared with fat naturally containing SOS, thus providing products having uniform quality. Further, after fractionating the fat which has been subjected to enzymatic transesterification, byproducts may be reusable as substrates for enzymatic transesterification, thus realizing cost-efficiency. Moreover, vegetable fat or oil may be used as fat-based materials having a higher SOS content due to enzymatic transesterification, so that yield may be increased when producing SOS hard butter.

The solvent may include any solvent which can dissolve the fat-based material, without being particularly limited, for example, acetone, n-hexane, methyl ethyl ketone, ethanol, or mixtures thereof.

In preparation of the fat solution, the higher the concentration of the fat solution, in which the fat-based material is dissolved in the solvent is, the greater the preparation efficiency could be obtained. Thus, the fat solution may be prepared such that the fat-based material may be contained in at least 25 w/w% and the amount of the fat-based material dissolved in the solvent may be preferably maximized.

The solvent fractionation may be performed using a device generally used in the art, for example, a double-jacket reactor. In crystallizing and removing the high-melting-point fraction, the fat solution may be left at 10 to 25°C until the fat is crystallized, which may be carried out for about 2 to 5 hours. When crystallization is sufficiently achieved, solid phase is separated from liquid phase, thereby removing the high-melting-point fraction using a vacuum filter. Then, the liquid components, from which the solid phase has been removed, are put back into the reactor, dissolved and left at 0 to 15°C until the fat is crystallized, which may be conducted, for example, for about 10 to 15 hours. Here, the reaction solution is stirred at 30 to 40 rpm to raise a temperature transfer speed from the coolant to the fat, thereby further accelerating crystallization of the fat. When crystallization is sufficiently achieved, solid phase is separated from liquid phase, thereby collecting the solid phase. The obtained solid phase is mid-melting-point fats, which contains at least 85% of SOS.

Solvent fractionation is a very cost-efficient method which enables reduction in working time and costs for producing hard butter since it can produce high-purity SOS hard butter by a fractionation method at room temperature, not at an extremely low temperature, unlike a conventional method of preparing SOS hard butter.

SOS hard butter produced via the solvent fractionation is a mid-melting-point fat, which is properly melted in the mouth and thus is used for preparing chocolates, especially chocolate having an excellent taste. The SOS hard butter may also be prepared with inexpensive production cost, and thus, the method of the invention is cost-effective. Further, the SOS hard butter prepared by the solvent fractionation may be used as a mixture with natural fats and oils or fractions thereof, for example, hard palm middle fraction (HPMF), thus exhibiting similar physical properties to those of cocoa butter. The SOS hard butter prepared by the solvent fractionation may also be used for producing chocolates as fat together with natural fats and oils or fractions thereof.

Thus, in another aspect of the invention, chocolates including the hard butter prepared by the above method are provided.

The chocolates refer to processed food produced by adding other food or food additives to cocoa raw materials obtained from the seeds and nuts of the Theobroma cacao tree. The chocolates include chocolate, milk chocolate, chocolate equivalents, and chocolate products. Chocolate is processed food which is produced by adding sugar, oil or fat, milk products, food or food additives to cocoa raw materials and contains at least 20 % cocoa raw materials (at least 10 % cocoa butter). Milk chocolate is processed chocolate which is obtained by adding sugar, fat or oil, milk products, food or food additives to cocoa raw materials and contains at least 12% cocoa raw materials and at least 8% fat solid content. Cocoa equivalents refer to processed food which is obtained by adding sugar, fat or oil, milk products, food or food additives to cocoa raw materials and contains at least 7% cocoa raw materials or at least 2% cocoa butter and at least 10% fat solid content. Chocolate products refer to foods produced by processing edible food, such as nuts, candies, biscuits, or the like, with chocolate, milk chocolate or chocolate equivalents by mixing, coating, filling, combining, or the like. These chocolates may be prepared by a general method known in the art, and the hard butter produced by the method of the present invention may be used as a fat ingredient for producing chocolates, together with natural fat and oil or factions thereof, if necessary. Using the hard butter produced by the method of the present invention may enable reduction in manufacturing costs of chocolate and increase in solidity, thereby producing high value chocolates.

### [Advantageous Effects]

In a method of producing SOS hard butter according to embodiments of the present invention, high-purity SOS hard butter containing at least 85% SOS can be produced by a solvent fractionation method at room temperature. Thus, the method is a cost-effective method that enables decrease in work time and process costs as compared with a conventional method. Further, the hard butter produced by the method may be used as a mixture with natural fats and oils or fractions thereof, for example, hard palm middle fraction (HPMF), thus exhibiting similar physical and chemical properties to those of natural cocoa butter. In addition, the hard butter produced by the method according to the embodiments may be used for producing chocolate, properly being mixed with natural fats and oils or fractions thereof, if necessary.

### [Description of Drawings]

Fig. 1 is a graph depicting the composition of triacylglycerides in fat after enzymatic transesterification according to one embodiment of the present invention, as identified by high-performance liquid chromatography (HPLC);
Fig. 2 is a graph depicting the composition of triacylglycerides in mid-melting-point fat finally obtained after fractionation using acetone according to the embodiment of the present invention, as identified by HPLC;
Fig. 3 is a graph depicting the composition of triacylglycerides in mid-melting-point fat finally obtained after fractionation using hexane according to the embodiment of the present invention, as identified by HPLC;
Fig. 4 is a graph depicting solid fat content (SFC) of mid-melting-point fat obtained after fractionation using acetone by the method of producing SOS hard butter according to the embodiment of the present invention, as analyzed using nuclear magnetic resonance (NMR); and
Fig. 5 is a Differential Scanning Calorimetry (DSC) graph of mid-melting-point fat finally obtained after fractionation using acetone by the method of producing SOS hard butter according to the embodiment of the present invention, as analyzed by DSC.

### [Mode for Invention]

Hereinafter, the present invention will be explained in more detail with reference to the following examples. These examples are provided for illustration only and are not to be in any way construed as limiting the present invention.

### Example 1

High oleic acid content sunflower oil and stearic ethyl ester were subjected to transesterification in the presence of an sn-1,3-specific enzyme, Lipozyme RMIM (immobilised sn-1,3-specific lipase from Rhizomucor miehei), such that a fat-based material in which an SOS content was at least 25 w/w% was obtained. The synthesized meterial was distilled at 0.001 mbar and 230°C to remove ethyl ester and to have at least 98 % of triacylglycerides (TAGs).

1 kg of the fat-based material obtained via transesterification was mixed with 4 kg of acetone and thoroughly dissolved, with a stopper closing the container so as not to volatilize the acetone. The mixture solution was subjected to crystallization of a high-melting-point fraction first using a double-jacket reactor. The mixture solution was stirred at 25°C and 30 rpm for 3 hours, followed by vacuum filtration, thereby separating into a solid and a liquid.

The filtrated liquid fat was obtained at a yield of at least 98 %, and the liquid was put back into the double-jacketed reactor and thoroughly dissolved at 60°C so as to collect mid-melting-point fat. In order to separate low-melting-point fat from mid-melting-point fat, an about 15°C refrigerant was passed into the reactor for about 10 hours and stirred at 30 rpm. Then, a liquid and a solid were separated using vacuum filtration, followed by removal of the acetone via vacuum distillation, thereby obtaining solid mid-melting-point fat (weight: 255 g, total yield: 25.5 %, SOS yield: 82 %).

### Example 2

As in Example 1, high oleic acid content sunflower oil and stearic ethyl ester were subjected to transesterification in the presence of an sn-1,3-specific enzyme, Lipozyme RMIM (immobilised sn-1,3-specific lipase from Rhizomucor miehei), such that an SOS content was at least 25 w/w%. The synthesized fat was distilled at 0.001 mbar and 230°C to remove ethyl ester and to have at least 98 % of triacylglycerides (TAGs).

1 kg of the fat-based material obtained via transesterification was mixed with 4 kg of n-hexane and thoroughly dissolved, with a stopper closing the container so as not to volatilize the n-hexane. The solution was subjected to crystallization of a high-melting-point fraction first using a double-jacket reactor. The mixture solution was stirred at 10°C and 30 rpm for 3 hours, followed by vacuum filtration, thereby separating into a solid and a liquid.

The filtrated liquid fat was obtained at a yield of at least 98 %, and the liquid was put back into the double-jacket reactor and thoroughly dissolved at 60°C so as to collect mid-melting-point fat. In order to separate low-melting-point fat from mid-melting-point fat, a refrigerant at about 5°C was passed into the reactor for about 10 hours and stirred at 30 rpm. Then, a liquid and a solid were separated using vacuum filtration, followed by removal of the n-hexane via vacuum distillation, thereby obtaining solid mid-melting-point fat (weight: 250 g, total yield: 25 %, SOS yield: 79 %).

### Experimental Example 1: Analysis of structure of triacylglyceride

The structure of TAGs changes through enzymatic transesterification, which determines physical and chemical properties of fat. Thus, the kind and content of TAGs in the fat before and after enzymatic transesterification in Example 1 were identified using HPLC.

Analysis of TAGs was conducted using HPLC under conditions listed in Table 1. The TAG structure of the fat before and after fractionation was analyzed using reverse-phase high-performance liquid chromatography and an evaporative light scattering detector (ELSD). 30 µl of the specimen and 10 ml of hexane were filtered using a PEFE syringe filter (25 mm, 0.2 µm) and then put in a 2-mm vial, and 20 µl of the specimen was injected using an auto-sampler. Acetonitrile (Solvent A) and hexane/isopropanol (Solvent B) were used as solvents, and a flow rate was 1 ml/min. Solvent gradient elution (A:B, v:v) was conducted for 70 minutes in total, which was performed at 80:20 for 45 minutes, at 54:46 up to 60 minutes, and then at 80:20 from 60 minutes to 70 minutes.

**Table 1**

| | |
|---|---|
| Equipment | Agilent, 1200 HPLC Chemstation |
| Column | NOVA-pack C18 60A 4 µm (3.9 x 150 nm, Waters) |
| Detector | Alltech, Evaporative Light Scattering Detector (ELSD) |
| Amount of Sample | 20 µl |
| Solvent | Acetonitrile:hexane/isopropyl alcohol gradient solvent system |
| Detector Gain | 1 |
| Temperature of Detector Oven | 80°C |
| Carrier Gas | N₂ (1.5L/min) |

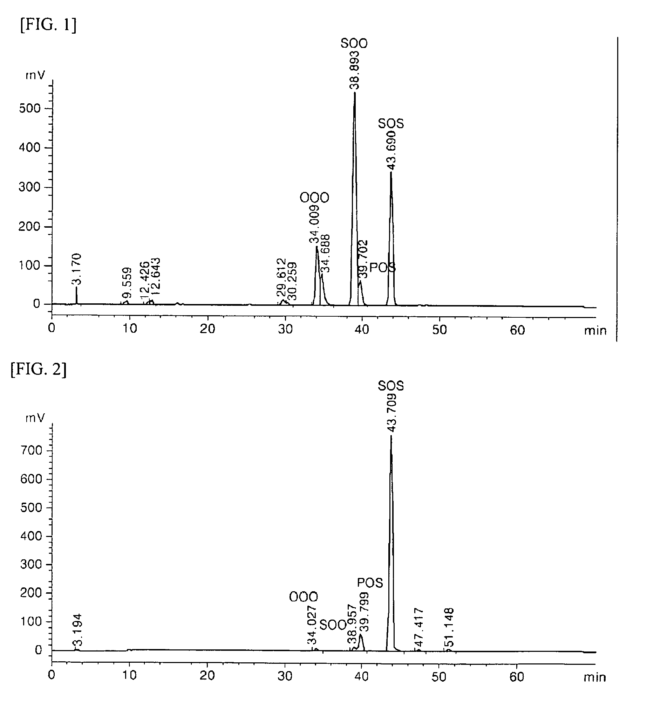

The TAG compositions of the fat before and after the enzymatic transesterification were identified through HPLC, and results are illustrated in Figs. 1 to 3.

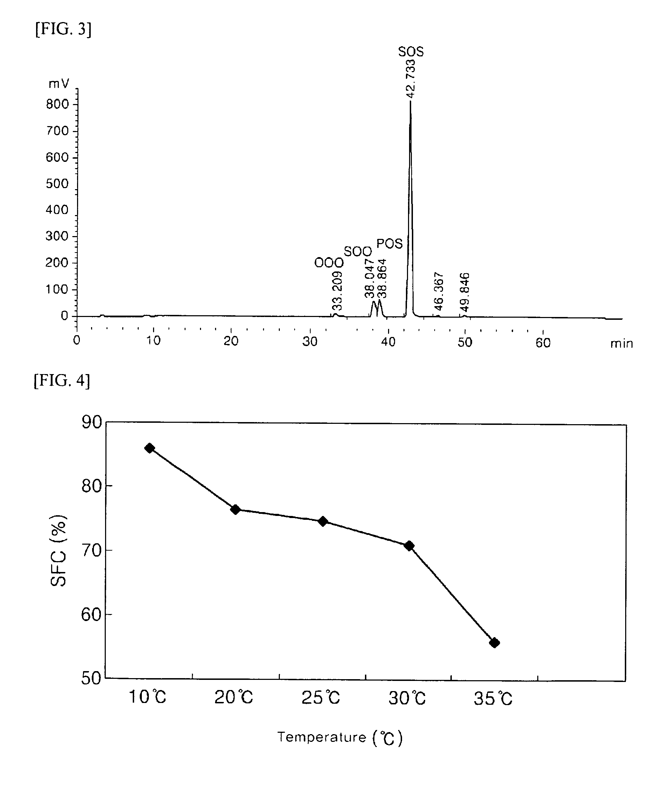

Figs. 1 to 3 are graphs illustrating the compositions of TAGs in the fat before enzymatic transesterification (Fig. 1), after fractionation using acetone in Example 1 (Fig. 2), and after fractionation using hexane in Example 2 (Fig. 3), identified by HPLC. Fig. 1 shows that OOO content is 13.5%, SOO is content 40.4% and SOS is 26.7%, and SOS content before fractionation is 26.7%. Fig. 2 shows that SOO content is 2.5%, POS content is 6.5% and SOS content is 86.5%, and SOS content is increased by about 60 % after fractionation using acetone. Fig. 3 shows that SOO content is 6.5%, POS content is 6.5 % and SOS content is 85.5 %, and SOS content is increased by about 60 % after fractionation using hexane. Further, SOS content is increased after fractionation to a similar degree as when fractionation is conducted using acetone.

In Figs. 1 to 3, OOO, SOO, SOS and POS are as follows.
OOO: triolein
SOO: 1-stearoyl-2,3-dioleoylglycerol
SOS: 1,3-distearoyl-2-oleoylglycerol
POS: 1-palmitoyl-2-oleoyl-3-stearoylglycerol

### Experimental Example 2: Analysis of Solid Fat Content (SFC) using Nuclear Magnetic Resonance (NMR)

Solid fat content (SFC) of the solid mid-melting-point fat obtained in Example 1 was analyzed using nuclear magnetic resonance (NMR). The SFC analysis using NMR was carried out under conditions listed in Table 2.

An SFC analysis test using NMR was conducted by a parallel method. Five 3-ml samples after acetone fractionation were prepared and sufficiently melted at 80°C in pre-treatment, followed by cooling at 60°C for 10 minutes and then at 0°C for 90 minutes. Then, the crystals were stabilized at 26°C for 40 hours and then cooled at 0°C for 90 minutes. The samples were left for 30 minutes in a Celsius bath with a metal block thermostat preset to 10.0°C, 20.0°C, 25.0°C, 30.0°C, and 35.0°C, respectively, followed by SFC measurement. SFC was measured for about 6 seconds.

**Table 2**

| | |
|---|---|
| NMR Equipment | Bruker, minispec |
| Frequency | 60 MHz |
| Amount of Sample | 3 ml |
| Temperature of Pre-treatment | 100 metal block thermostat, 0°C |
| Temperature of Experiment | 10.0°C, 20.0°C, 25.0°C, 30.0°C, 35.0°C |

Analysis results of SFC of the solid mid-melting-point fat obtained in Example 1 using NMR are illustrated in Fig. 4. As shown in Fig. 4, the SOS hard butter is 86.1 % at 10°C, 76.4 % at 20°C, 74.8 % at 25°C, 70.9 % at 30°C and 56.0 % at 35°C. A high SFC may enable the fat to remain solid by mixing with natural fats and oils having a low SFC or fractions thereof.

### Experimental Example 3: Analysis of physical properties and shapes using Differential Scanning Calorimetry (DSC)

Melting profiles before and after solvent fractionation may be measured using a differential scanning calorimeter, which is used to identify whether high-melting-point and low-melting-point fractions are removed. The solid mid-melting-point DSC profile of the fat finally obtained after acetone fractionation in Example 1 was measured.

Analysis conditions are listed in Table 3.

**Table 3**

| | |
|---|---|
| DSC Equipment | TA Q20 |
| Temperature of Experiment | -60 to 80°C |
| Cooling Rate | 10°C/min (up to -80°C) |
| Temperature Rising Rate | 5°C/min (up to 100°C) |
| Amount of Sample | 15 ± 5 mg |

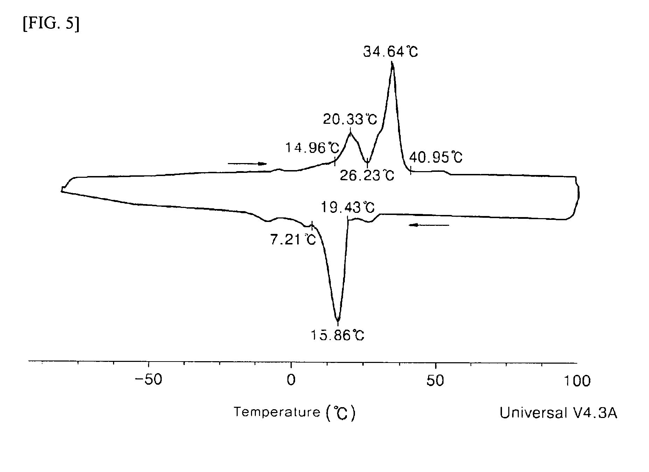

The measured DSC profile is illustrated in Fig. 5.

According to the DSC curve of Fig. 5, the fat has an overall phase change in a range of -60 to 80°C. The SOS hard butter is composed of a low-melting point fraction which melts at from 15 to 26°C and a high-melting point fraction which melts at from 26 to 40°C. In a process of cooling and crystallizing the fat, crystals are formed at from 19°C to 7°C. Therefore, the SOS hard butter may be mixed with natural fats and oils or fractions thereof at a properly adjusted ratio in view of melting and crystallizing properties of the natural fats and oils or fractions thereof, thereby developing fats exhibiting desired physical properties.

Although some embodiments have been disclosed herein, it should be understood that these embodiments are provided by way of illustration only, and that various modifications, changes, and alterations can be made without departing from the spirit and scope of the invention. Therefore, the scope of the invention should be limited only by the accompanying claims and equivalents thereof.

## Claims

1. A method of producing 1,3-distearoyl-2-oleoylglycerol (SOS) hard butter containing at least 85 w/w% of SOS among triacylglycerides by means of a solvent fractionation method, comprising:
preparing a fat solution by dissolving a fat-based material in a solvent;
crystallizing and removing a high-melting-point fraction by maintaining the fat solution at from 10 to 25°C; and
crystallizing and collecting a mid-melting-point fraction by maintaining the fat solution, from which the high-melting-point fraction has been removed, at from 0 to 15°C.

2. The method of claim 1, wherein the fat-based material comprises triacylglycerides obtained by transesterification of vegetable fat or oil having an oleic acid content of at least 80% and stearic ethyl ester in the presence of an sn-1,3-specific enzyme, followed by removal of the ethyl ester.

3. The method of claim 2, wherein the fat-based material comprises high oleic acid content sunflower oil.

4. The method of claim 2, wherein the removal of the ethyl ester is conducted at 0.001 to 0.1 mbar and 200 to 250°C.

5. The method of claim 1, wherein the solvent comprises hexane, acetone, methyl ethyl ketone, ethanol, or mixtures thereof.

6. The method of claim 1, wherein the fat solution in the preparing the fat solution is prepared to contain at least 25 w/w% of the fat-based material.

7. Chocolates comprising the SOS hard butter produced by the method of any one of claims 1 to 6.
